# EUROPEAN PATENT SPECIFICATION

(11) **EP 1 782 039 B1**
(45) Date of publication and mention of the grant of the patent: **10.09.2008**
(21) Application number: 04744204.1
(22) Date of filing: 02.07.2004
(51) Int. Cl.: G01N 3/42

(54) **HARDNESS TESTER WITH INDENTER OF HARD METAL OR COMPOUND AND OSCILLATING CROWN FOR TESTING AT HIGH LOAD AND METHOD OF COMPARATIVE ASSESSMENT OF THE HARDNESS/DEPTH PROFILE**
HÄRTEPRÜFGERÄT MIT EINDRUCK-PRÜFKÖRPER AUS HARTMETALL ODER EINER HARTEN VERBINDUNG UND SCHWINGKRONENSTÜCK ZUM TESTEN BEI HOHER LAST SOWIE VERFAHREN ZUR VERGLEICHENDEN BEURTEILUNG DES EINHÄRTUNGSPROFILS
APPAREIL D'ESSAI DE DURETE POURVU D'UN PENETRATEUR DE METAUX OU DE COMPOSES DURS ET D'UNE COURONNE OSCILLANTE D'ESSAI A CHARGE ELEVEE ET PROCEDE D'EVALUATION COMPARATIVE DU PROFIL DE DURETE/PROFONDEUR

(43) Date of publication of application: 09.05.2007
(73) Proprietor: Ernst, Erik, 21020 Casciago (IT)
(72) Inventor: Ernst, Alfred, . (IT)
(74) Representative: Pellegri, Alberto
(86) International application number: PCT/IB2004/002565
(87) International publication number: WO 2006/008574

(56) References cited:
- US-A- 3 653 256
- US-A- 3 877 298
- US-A- 4 023 401
- US-A- 4 107 978
- US-A- 4 444 045

## Description

The present invention relates to hardness testers that is to instruments used for determining the hardness of solid materials and finished mechanical components and relative testing techniques.

Quality control in the fabrication of particularly stressed components of machinery, engines, turbines, steams, valve seats, pistons, cylinders and innumerable components parts of mechanical devices can hardly rescind from testing the hardness.

Hardness testers are instruments used in innumerable situations in order to control the quality of surface treatments, cladding materials, mechanical components of machines, metallic and nonmetallic laminates, castings and the like.

The structure of a hardness tester is well known and essentially consists of a frame having a robust stress structure mechanically connecting an anvil, onto which is sustained the object to be tested, to the indenter mounted on a pivoting arm of the stress structure. The pivoting arm carrying the indenter may be loaded with a certain load, sufficient to produce an indentation by the tip of the indenter on the surface of the object being tested.

It is evident as the stress structure must be dimensioned in such a way as to prevent flexions, in order to ensure a correct and reliable reference system for the forces and displacements that take place.

Beside the fact that hardness measurements may even be a valuable tool for checking with a certain approximation the mechanical characteristics of a substantially homogeneous material, they become essential for testing the effectiveness of certain specific treatments of surface hardening such as induction hardening, cementation, nitridization and the like, as well as the coating of the surface of a machined piece with a hard material (e.g. chromium), often deposited in several layers to build up a fmal thickness of the hard coating.

Hardness tests, especially in case of surfaces of metals or alloys that have been subjected to specific superficial hardening treatments or of the surface of coating layers of hard metallic materials, are normally performed by using an indenter tip of diamond capable of ensuring a substantial absence of wear during a prolonged use of the indenter on particularly hard materials as those mentioned above.

The dimensions of the indentation produced by the tip of the indenter on the surface of the piece provide an indication for the hardness, according to the relative standard followed (Brinell, Vickers and the like).

Traditionally basic information is derived by direct visual inspection through magnifying glasses or a microscope of the indentation. More recently in order to facilitate hardness measurements "on field" as well as at recessed points of the surface of interest of the solid piece not amenable to be inspected with optical instruments, special "direct-reading" hardness measuring instruments have been developed, capable of deriving primary information on the indentation caused by the tip of the indenter through a contact resistance measurement and/or through a displacement (depth) measurements of the tip of the indenter relative to the reference surface plane of the solid piece being tested. A microprocessor system included in the instrument processes the load and indentation data producing the desired indication of the hardness.

The possibility offered by these types of "direct reading" hardness testers having data processing capabilities of generating diagrams of hardness in function of the applied load, permits to derive, in a practically nondestructive manner, useful information on the hardness profiles, that is on how the hardness varies in function of the depth of penetration of the indenter in the piece to be tested.

In case of testing techniques that contemplate an instrumental measure of the imprint and in particular the instrumental determination of the depth of penetration of the tip of the indenter in function of the applied load by using an appropriate sensor of relative displacement, the hardness tester includes mechanical reference elements in order to measure the displacement of the tip of the indenter with reference to the plane of the surface of the tested piece in the neighborhood of the point of penetration. To this purpose, it is commonly employed a cylindrical sleeve resting on the surface of the piece to be tested through which the stem of the indenter may freely move (advance) during the penetration.

US3653256 describes a hardness measuring apparatus comprising a sustaining arm of a sensor with a feeler of linear displacement, an oscillating arm and a spring spacing said sustaining arm and said oscillating arm.

US4023401 describes a hardness measuring apparatus comprising a shell to facilitate the axial alignment of the indenter.

The usefulness of deriving information, though with a certain approximation, on the hardness profile in proximity of the outer surface of the piece to be tested, is well recognized for carrying out quality controls of hardening treatments or of deposited hard coating layers.

Evidently this requires the application of exceptionally high loads to the indenter to ensure an appropriate penetration (depth of imprint) which differently from traditional hardness testers may reach up to several thousands of kilograms.

The carrying out of hardness tests at increasingly high loads on test surfaces characterized by the presence of a relatively hard superficial layer and of a bulk substrate that is relatively less hard and often of mechanical characteristics quite different from those of the hard superficial layer, determines work conditions that may put at risk the integrity of costly diamond indenter tips which may be subject to destructive fractures.

Another flaw and disadvantage of known hardness testers is due to the fact that the reference sleeve resting on the surface of the piece being tested, in order to establish the origin of the spatial reference frame on the basis of which the load driven penetration of the tip of the indenter is measured, represents an encumbrance that often makes difficult or does not permit to test hardness at the bottom of relatively narrow depressions, on surfaces that are not perfectly orthogonal to the axis of advancement of the indenter or on wavy surfaces.

To these aspects of relative impracticalness of known testers, limitations of use and risks of extremely costly substitution of the diamond tip, the hardness tester object of the present invention offers an effective and unsuspectably simple solution.

According to an aspect of the present invention, the reference cylindrical sleeve has a terminal crown that is suspended therefrom but free to oscillate with respect to the rest of the reference sleeve assembly and terminates spikes projections from positions of the circular end surface of the crown suitable to bear on the surface of the piece to be tested.

The crown has an inner circular surface defining a cuspid, along a diameter orthogonal to the diameter of alignment of said two spikes, for bearing on a terminal circular surface of the cylindrical sleeve, such to determine a fulcrum type of bearing along the two diametrically aligned vertexes of the cuspid.

According to a preferred embodiment, the indenter does not have a diamond tip but is made of a hard metal or of an equivalently hard compound material provided with a conical tip.

In fact, contrary to what is commonly regarded as necessary that is to employ a diamond indenter for testing hardness on relatively hard surfaces because of the wear resistance characteristic of diamond, it has been found that a hardness tester made according to the present invention and using an indenter of hard metal, is perfectly suitable for conducting hardness tests on hardened surfaces having a hardness of up to 65 HRC and even higher, by loading the indenter up to 3000 Kg and beyond, even under conditions of abruptly changing a elasto/plasto/elasto reactions from the tested piece, because of the superficial stratification due to the hardening process and/or to the presence of eventual coating layers of a hard alloy.

**Figure 1** is a cross sectional view of the device for detecting the depth of penetration of the tip of an indenter of a hardness tester made according to the present invention.

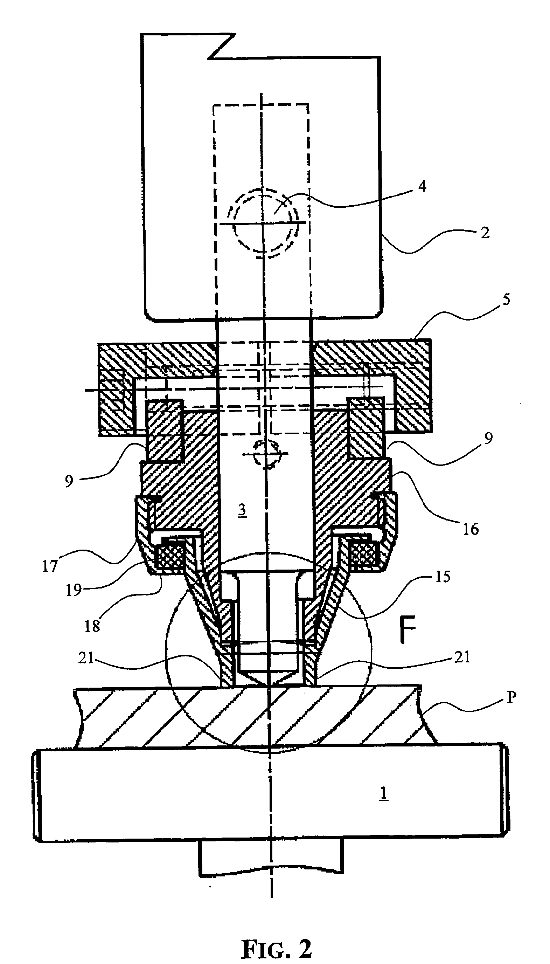

**Figure 2** is a front view (orthogonal to the view of Figure 1, of the same subassembly of the hardness tester).

**Figure 3** is a plain view of the same device.

**Figure 4** is an enlarged detailed view of the tip of the indenter and of the sliding reference sleeve provided with the freely oscillating crown.

**Figures 5** and 6 show the manner in which the freely oscillating crown may be rotated for adapting its resting on the surface of the piece even in presence of an imperfect orthogonality of the surface of the piece to be tested in respect to the axes of advancement of the indenter.

In all Figures, the same symbols are used for identifying the different elements that compose the device.

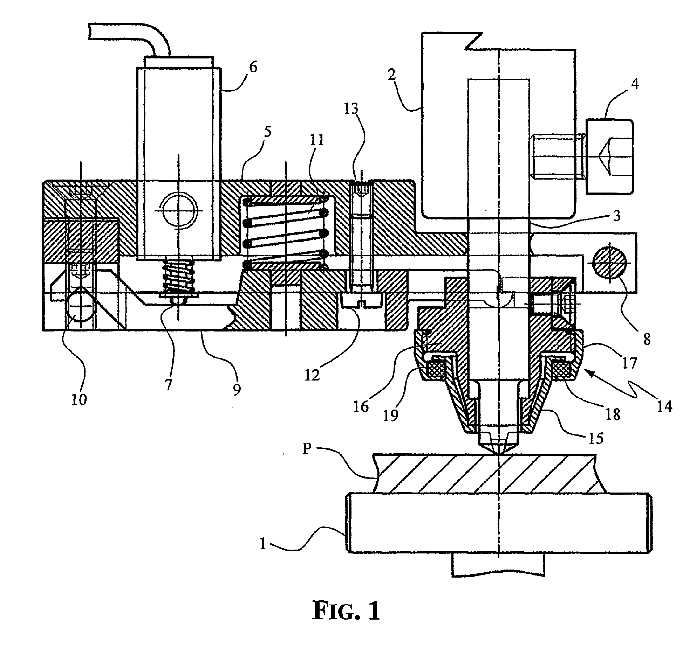

The stress structure of the hardness tester that establishes the load effectively applied to the indenter is not shown completely in view of the fact that such a structure is perfectly figurable by any skilled person and may be any of the known stress structures used in this type of hardness testers. Of such a stress structure, in Figure 1 are visible the anvil 1, onto which rests the piece P to be tested, and the overhanging end of the stress structure of the hardness tester represented by the head 2, holding the cylindrical stem of the indenter 3, fixed by the set screw 4.

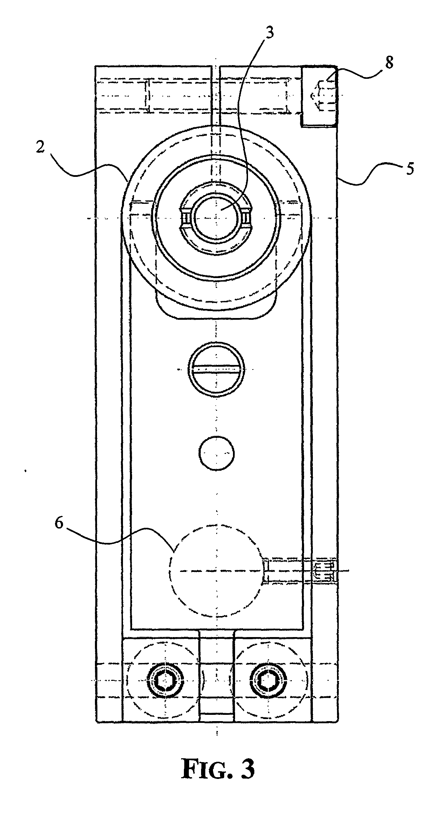

The device comprises a sustaining arm 5 of a sensor 6 with feeler 7 for detecting the movement of the tip of the indenter. The arm 5, carrying the sensor 6, terminates with a fork clamp, as may be better observed in the layout view of Figure 3, in order to mechanically connected with the stem 3 of the indenter by tightening the screw 8.

To the sustaining arm 5, functionally fastened to the indenter 3, such to follow its excursion during the advancing of the indenter toward the piece P to be tested, is associated an oscillating arm 9 that is suspended from the sustaining arm 5 and onto which the feeler 7 of the sensor 6 bears.

The oscillating arm 9 is suspended from the sustaining arm 5 through a fulcrum rest or pivot 10 and by the trimmable spring 11 and suspension screw 12 fixtures, which ensure, at rest, a certain gap between the oscillating arm 9 and the overhanging sustaining arm 5, by determining a stable stop position on the head of the screw 12 that is driven into a threaded hole of the sustaining arm 5, up to force against a stop screw 13.

For a precise measure of the effective depth of penetration of the tip of the indenter on the basis of the displacement sensed by the sensor 6, any elastic flexion of the metal indenter projecting from the end clamps of the sustaining arm 5, must be compensated.

Such a flexion is readily calculable by knowing the shape of the indenter 3, the elastic modulus of the material with which the indenter is made (about 2.5 times that of ordinary steel) and is directly proportional to the load acting on it.

The end of the arm 9 free to oscillate sustains a reference sleeve indicated with 14 as a whole, inside which the stem of the indenter (3) freely slides.

According to an aspect of the invention, the reference sleeve assembly 14 comprises a terminal crown 15, one end of which is retained in a functionally unrestrained manner within the cylindrical body 16 of the reference sleeve assembly. In the sample embodiment shown, an end portion of the terminal crown 15 is retained within the reference sleeve assembly 14 by a threaded ring 17 driven on a threaded end portion of the cylindrical body 16.

Preferably, as shown in the figures, the retained end portion of the crown 15 has a flange 18 that freely rests on an elastic gasket 19, for example a ring of elastomer, disposed on an inner counterflange surface of the retaining ring 17.

The terminal crown 15 has two spikes 20 and 21 which project, from two diametrically opposed positions of the circular end of the crown.

Being the retained terminal crown 15 free to be rotated, it permits to dispose the two spikes 20 and 21 in any radial alignment in respect to the axis of advancement of the tip of the indenter 3.

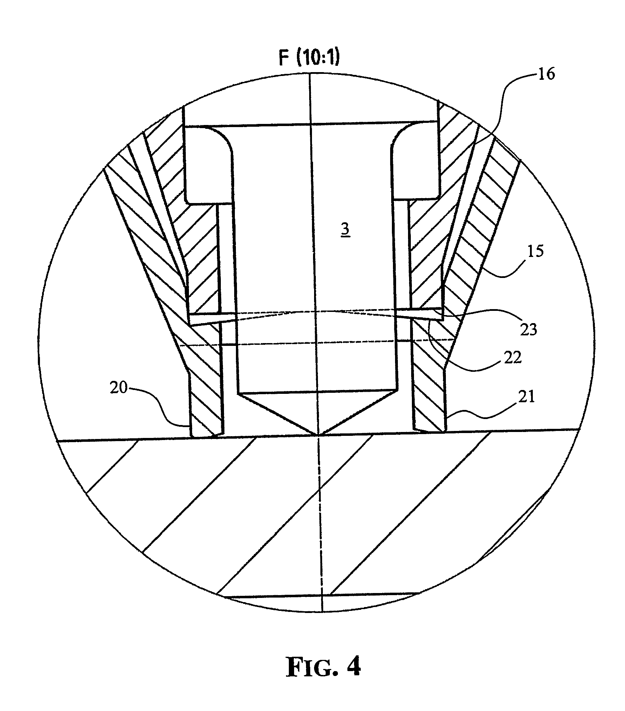

By observing the detailed enlarged view of Figure 4, the terminal crown 15 has an inner circular surface 22 that does not lay on an plane orthogonal to the longitudinal axis of the reference sleeve assembly. On the contrary, the inner circular surface 22 defines a crest or cuspid along a diameter orthogonal to the diameter of alignment of the two spikes 20 and 21, such to establish a linear rest of the opposing terminal flat circular surface 23 of the body 16.

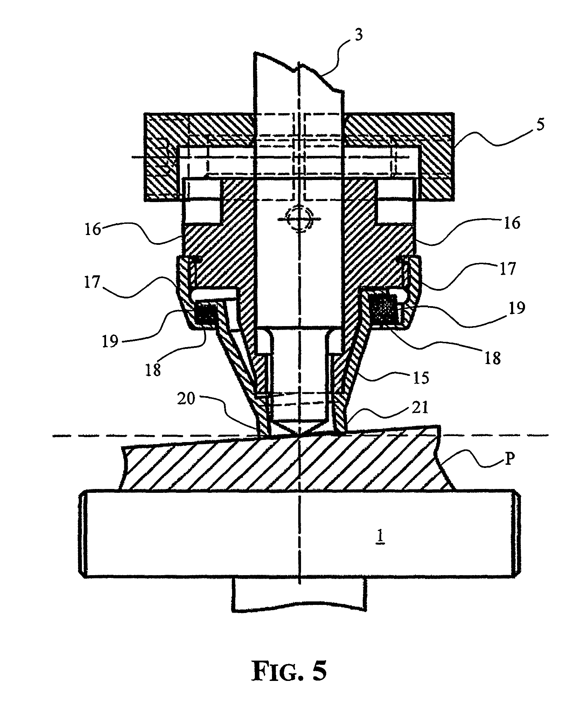

Because of this, as may be readily observed in the enlarged cross section of Figure 4, the crown 15 is free to incline itself in one or the other direction by rotating about the rest line defined by said cuspid on the terminal circular surface of the body 16, adapting its asset to an eventually not perfectly orthogonal surface of the piece in the vicinity of the point to be tested, as depicted in Figure 5.

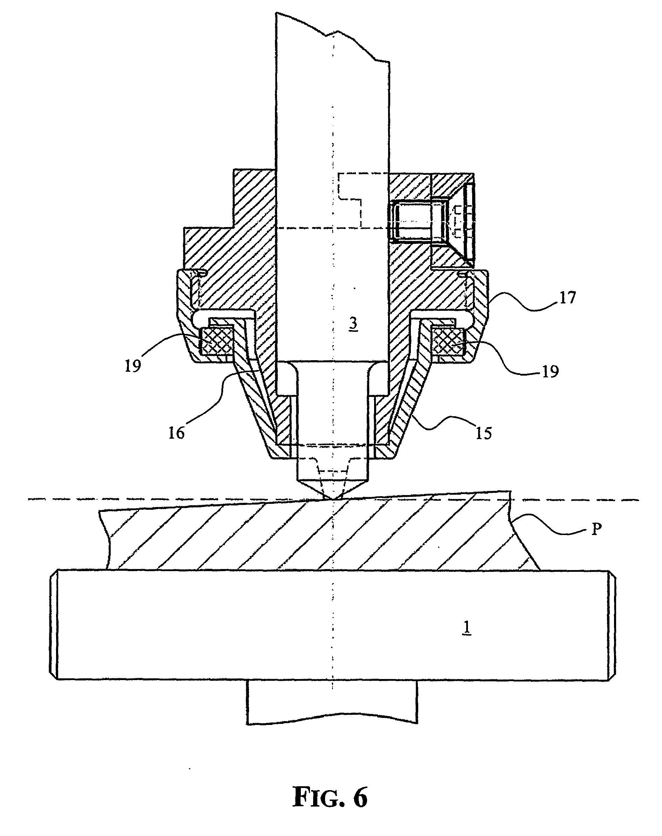

This permits, even in presence of an imperfect orthogonality of the surface of the piece to be tested P, in respect to the axis of advancement of the indenter 3, to rotate the terminal crown 15 until disposing the two rest spikes 20 and 21 along a line orthogonal to the slope of the surface of the piece, as shown in Figure 6.

In this way, a precise coincidence of the level of abutment of the two spikes 20 and 21 and of the tip of the indenter 3 on the surface of the piece, even if not perfectly orthogonal to the axis of movement of the indenter is attained. This ensures a more precisely defined spatial reference frame origin for detecting the depth of penetration of the tip of the indenter 3 in the piece P, in function of the load applied to the indenter.

The function of the reference sleeve assembly 14 is that of determining the origin of the reference frame from which depth of penetration is measured (the origin coinciding with the application of a load no longer null to the indenter by the stress structure of the hardness tester).

Another advantage over known devices is that of leaving the point of penetration visible during the test.

A further advantage consists in establishing the reference abutment by two narrow spikes 20 and 21 of relatively reduced encumbrance. This makes possible to access for testing the hardness even at the bottom of a relatively narrow depression of the piece to be tested.

As shown in the Figures, the indenter 3 used is of a hard metal or of a hard compound and has a conical tip, the angle of conicity of which may be generally comprised between 100° and 120°.

A satisfactory material that has been used for conducing a test campaign was of a compound consisting of 95% WC, 1% TaC and 4% Co (all percentages being by weight).

With such an indenter of hard metal, after 1400 tests (imprints), no failures was recorded. The test campaign was conducted on numerous samples hardened with different techniques and on numerous samples coated with a layer of chromium.

The hardness of the test samples was generally comprised between 680 and 750 HV.

The wear of the tip of the hard metal indenter was controlled periodically by observing its morphology and verifying its geometry using a projector (x 100) and by comparing a periodically detected sequence of pairs of *load-penetration* (depth of) values (for gradually increasing loads) on a homogenous reference sample of known hardness (600 HV in our test campaign) with a corresponding sequence of pairs of values detected on the same reference sample of known hardness with the virgin indenter, before starting the test campaign.

In this way, by periodically recalibrating when never necessary, the hardness tester, it is possible to continue to use the indenter of hard metal for an indefinite maximum number of tests.

In the test campaign, for up to 100 imprints carried out on samples of various hardnesses, a practically perfect reproducibility of the sequence of pair of load-penetration values originally detected on the reference sample of known hardness with the virgin indenter as observed.

Only upon reaching the 120th test, and notwithstanding the fact that the observation of the tip of the indenter did not show any recognizable wear, the sequence of pairs of load-depth of penetration values detected on the reference sample of known and homogeneous hardness started to show a deviation from the initial reference curve, a deviation that could be valued in about 5% at relatively low loads.

At this point, the originally established calibration table (curve) was updated to yield correct hardness values, by compensating for the deviations observed at relatively low loads after 120 tests. Thereafter, the updated calibration table (curve) was used in substitution of the original table that was established with the virgin indenter and reproducibility of hardness measured values was reestablished.

According to a particularly preferred embodiment, the hardness tester of this invention, the instrument provides for the recording of the "coordinates" (that is of the pair of values) of the characteristic curve load/depth of penetration, in a continuous fashion, by discretization of the load values as furnished by the load sensor present in the stress structure of the hardness tester and of the sensor 6 that detects the relative linear displacement of the indenter tip, and their storage in dedicated memory buffers, as generated by an analog-digital converter.

A microprocessor processes the data of the periodically detected calibration curves detected on the reference sample of known hardness, storing the deviations as they manifest themselves.

During the actual testing of pieces to be tested, the microprocessor processes the acquired data, automatically introducing in real time the corrections based on the last updating of the stored deviations of the calibration curve, for outputting hardness values that have already been compensated, eventually in function of the depth of penetration of the indenter in the piece to be tested, for determining a hardness profile.

The hardness tester of the present invention is particularly suited to be used as a hardness "comparator".

The calibration may be carried out on a homogeneous reference sample that has previously been measured in terms of Vickers points, for example using a reference sample having a hardness of about 600 point pixels.

Such a reference sample practically constitutes the reference for assessing by comparison the hardness of an unknown piece.

By performing a measurement on such a reference sample, a load/depth of penetration diagram may be generated and stored.

Thereafter, on the piece to be tested a similar diagram load/depth of penetration is generated and also stored.

The microprocessor system of the hardness tester then compares the curve tested on the piece to be tested with the curve detected on the reference sample, on the assumption that for the same depth of penetration with the same indenter the ratio of the corresponding loads will be equal to the ratio of the respective hardnesses, thus generating a diagram or hardness profile in terms of Vickers points versus depth of penetration of the tip of the indenter for the tested piece.

## Claims

1. A device for detecting the depth of penetration of the tip of an indenter of a hardness tester in a piece sustained on an anvil (1) of a stress structure of the hardness tester, comprising a sustaining arm of a sensor (6) with a feeler (7) of linear displacement, terminating with a fork clamp tightened around a stem portion (3) of the indenter fastened to a loading head of said stress structure of the hardness tester, an oscillating arm (1) on which said feeler bears, sustained at a one end on a lever fulcrum connected to said sustaining arm and carrying at the other end a reference sleeve (14) sliding around the stem portion of the indenter, a calibrated spring (11) spacing said sustaining arm and said oscillating arm, suspended therefrom by said fulcrum rest and by a retaining screw driven, in contrast to the elastic reaction force of said calibrated spacing spring in a threaded hole of said sustaining arm, for establishing a maximum distance of separation at rest between the two arms, **characterized in that**
said reference sleeve has a terminal crown (15) turnable and slantable with respect to a cylindrical body of said sleeve, terminating with two spikes (20, 21) extending from diametrically opposed positions of a circular end surface of the terminal crown, the vertexes of which bear on the surface of the piece to be tested;
said terminal crown having an end retained within said cylindrical body of the sleeve;
said terminal crown having an inner circular surface defining a cuspid along a diameter orthogonal to the diameter of alignment of said two spikes, abutting on a planar circular end surface of said cylindrical body of the sleeve such to determine a linear or fulcrum abutment along diametrically aligned vertexes of said cuspid.

2. The device according to claim 1, wherein the end of said terminal crown (15) retained within said cylindrical body has a flange portion resting on an elastomer gasket (19).

3. A hardness tester including the device of claim 1 and further **characterized in that** said indenter is of a hard metal or compound.

4. A method of assessing the hardness of hard superficial layers employing a hardness tester according to claim 3, and comprising at least a first calibration carried out by establishing corresponding values of hardness for a sequence of pairs of load of depth/penetration values of the tip of the indenter in a reference sample of known and homogeneous hardness.

5. The method of claim 4, wherein periodic re-calibration of compensation of the wear of the tip of the indenter are carried out by reestablishing corresponding hardness values for said sequence of pair of values detected on the same reference of known and homogeneous hardness.

6. A method of deriving a hardness profile in terms of Vickers points for a certain depth by using a hardness tester according to claim 3, comprising the following steps:
a) detecting and storing a load/depth of penetration diagram of the tip of the indenter in a reference sample of known and homogeneous hardness, expressed in Vickers points;
b) detecting and storing a load/depth of penetration diagram of the tip of the indenter on a piece to be tested;
c) correlating the diagram detected on the piece to be tested to the diagram detected on the reference sample on the basis of the criterium that, using the same indenter, for the same depth of penetration the ratio of the applied loads in the two cases equals the ratio of the respective hardnesses expressed in Vickers points, for generating said hardness profile of the piece to be tested in terms of Vickers points versus depth of penetration.

## Patentansprüche

1. Vorrichtung zum Erfassen der Eindringtiefe der Spitze eines Stempels eines Härteprüfers in einem auf einem Amboss (1) einer Beanspruchungsstruktur des Härteprüfers unterstützten Teil, mit einem Unterstützungsarm für einen Sensor (6), der einen Fühler (7) für eine lineare Verlagerung besitzt, der in einer Gabelklemme endet, die um einen Stielabschnitt (3) des Stempels befestigt ist, der an einem Ladekopf der Beanspruchungsstruktur des Härteprüfers befestigt ist, einem oszillierenden Arm (9), an dem der Fühler aufliegt und der an einem Ende an einem Hebeldrehpunkt unterstützt ist, der mit dem Unterstützungsarm verbunden ist und das andere Ende einer Referenzhülse (14) trägt, die um den Stielabschnitt des Stempels gleitet, einer kalibrierten Feder (11), die den Unterstützungsarm und den oszillierenden Arm in einem Abstand hält und hieran durch die Drehpunktauflage und durch eine Halteschraube, die entgegen der elastischen Rückstellkraft der kalibrierten Abstandshalterfeder in eine Gewindebohrung des Unterstützungsarms getrieben wird, aufgehängt ist, um einen maximalen Trennabstand in Ruhe zwischen den beiden Armen zu schaffen, **dadurch gekennzeichnet, dass**
die Referenzhülse eine Abschlusskappe (15) besitzt, die in Bezug auf einen zylindrischen Körper der Hülse drehbar und neigbar ist und in zwei Dornen (20, 21) endet, die sich von diametral gegenüberliegenden Positionen einer kreisförmigen Stirnfläche der Abschlusskappe erstrecken und deren Spitzen sich auf der Oberfläche des zu prüfenden Teils abstützen;
die Abschlusskappe ein Ende besitzt, das in dem zylindrischen Körper der Hülse gehalten wird; und
die Abschlusskappe eine innere kreisförmige Oberfläche besitzt, die eine Rückkehrfläche längs eines Durchmessers senkrecht zu dem Ausrichtdurchmesser der beiden Spitzen definiert und an einer ebenen kreisförmigen Stirnfläche des zylindrischen Körpers der Hülse anliegt, derart, dass ein linearer oder Drehanschlag längs diametral ausgerichteter Spitzen der Rückkehrfläche bestimmt wird.

2. Vorrichtung nach Anspruch 1, wobei das Ende der Abschlusskappe (15), das in dem zylindrischen Körper gehalten wird, einen auf einer elastomeren Dichtung (19) ruhenden Flanschabschnitt besitzt.

3. Härteprüfer, der die Vorrichtung nach Anspruch 1 enthält und ferner **dadurch gekennzeichnet ist, dass** der Stempel aus Hartmetall oder einer Verbindung besteht.

4. Verfahren zum Prüfen der Härte harter Oberflächenschichten unter Verwendung eines Härteprüfers nach Anspruch 3, das wenigstens eine erste Kalibrierung umfasst, die durch Erzeugen entsprechender Härtewerte für eine Folge von Paaren von Last-/Eindringtiefen-Werten der Spitze des Stempels in eine Referenzprobe mit bekannter und homogener Härte ausgeführt wird.

5. Verfahren nach Anspruch 4, bei dem eine periodische Neukalibrierung zur Kompensation des Verschleißes der Spitze des Stempels durch erneutes Erzeugen entsprechender Härtewerte für die Folge von Wertepaaren, die an derselben Referenz mit bekannter und homogener Härte erfasst werden, ausgeführt wird.

6. Verfahren zum Ableiten eines Härteprofils anhand von Vickers-Punkten für eine bestimmte Tiefe unter Verwendung eines Härteprüfers nach Anspruch 3, das die folgenden Schritte umfasst:
a) Erfassen und Speichern eines Last-/Eindringtiefen-Diagramms der Spitze des Stempels in einer Referenzprobe mit bekannter und homogener Härte, ausgedrückt in Vickers-Punkten;
b) Erfassen und Speichern eines Last-/Eindringtiefen-Diagramms der Spitze des Stempels an einem zu prüfenden Teil;
c) Korrelieren des an dem zu prüfenden Teil erfassten Diagramms mit dem an der Referenzprobe erfassten Diagramm anhand des Kriteriums, dass unter Verwendung desselben Stempels für dieselbe Eindringtiefe das Verhältnis der ausgeübten Lasten in den zwei Fällen gleich dem Verhältnis der jeweiligen Härten, ausgedrückt in Vickers-Punkten ist, um die Härteprofile des zu prüfenden Teils anhand von Vickers-Punkten gegenüber der Eindringtiefe zu erzeugen.

## Revendications

1. Dispositif pour détecter la profondeur de pénétration de la pointe d'un marqueur d'un testeur de dureté dans une pièce portée sur une enclume (1) d'une structure de contrainte du testeur de dureté, comprenant un bras support d'un capteur (6) avec un palpeur (7) de déplacement linéaire, se terminant par une pince en fourche serrée autour d'une partie de tige (3) du marqueur liée à une tête de charge de la structure de contrainte du testeur de dureté, un bras oscillant (9) sur lequel porte le palpeur, porté à une extrémité sur un point d'appui de levier connecté au bras support et portant à son autre extrémité un manchon de référence (14) glissant autour de la partie de tige du marqueur, un ressort étalonné (11) espaçant le bras support du bras oscillant, suspendu par le point d'appui et par une vis de maintien entraînée, en réaction à la force élastique du ressort d'écartement étalonné dans un trou taraudé du bras de support, pour fixer une distance maximum de séparation au repos entre les deux bras, **caractérisé en ce que** :
le manchon de référence comporte une couronne terminale (15) pouvant tourner et glisser par rapport au corps cylindrique du manchon, se terminant par deux pointes (20, 21) s'étendant à partir de parties diamétralement opposées d'une surface d'extrémité circulaire de la couronne terminale dont les sommets portent sur la surface de la pièce à tester ;
la couronne terminale ayant une extrémité maintenue dans le corps cylindrique du manchon ;
la couronne terminale ayant une surface interne circulaire définissant une dent le long d'un diamètre orthogonal au diamètre d'alignement de deux pointes, butant sur une surface d'extrémité plane circulaire du corps cylindrique du manchon de façon à déterminer une butée linéaire ou en point d'appui le long des sommets diamétralement alignés de la dent.

2. Dispositif selon la revendication 1, dans lequel l'extrémité de la couronne terminale (15) maintenue dans le corps cylindrique comporte une partie de flasque reposant sur un joint en élastomère (19).

3. Testeur de dureté incluant le dispositif selon la revendication 1, et **caractérisé en outre en ce que** le marqueur est en un métal ou un composé dur.

4. Procédé de mesure de la dureté de couches superficielles dures en utilisant un testeur de dureté selon la revendication 3, comprenant au moins un premier étalonnage effectué en établissant des valeurs correspondantes de dureté pour une succession de paires de valeurs de charges de profondeur de pénétration de la pointe du marqueur dans un échantillon de référence de dureté connue et homogène.

5. Procédé selon la revendication 4, dans lequel un réétalonnage périodique de compensation de l'usure de la pointe du marqueur est effectué en rétablissant des valeurs de dureté correspondantes pour la séquence de paires de valeurs détectées sur la même référence de dureté connue et homogène.

6. Procédé de fourniture d'un profil de dureté en terme de points de Vickers pour une certaine profondeur en utilisant un testeur de dureté selon la revendication 3, comprenant les étapes suivantes :
a) détecter et stocker un diagramme de charge-profondeur de pénétration de la pointe du marqueur dans un échantillon de référence de dureté connue et homogène, exprimé en points de Vickers ;
b) détecter et stocker un diagramme de charge-profondeur de pénétration de la pointe du marqueur sur une pièce à tester ;
c) corréler le diagramme détecté sur la pièce à tester avec le diagramme détecté sur l'échantillon de référence sur la base du critère selon lequel, en utilisant le même marqueur, pour la même profondeur de pénétration, le rapport des charges impliquées dans les deux cas est égal au rapport de la dureté respective exprimée en points de Vickers, pour produire le profil de la dureté de la pièce à tester en terme de points de Vickers en fonction de la profondeur de la pénétration.
